# FASCICULE DE BREVET EUROPEEN

(11) **EP 3 051 681 B1**
(45) Date de publication et mention de la délivrance du brevet: **12.02.2020**
(21) Numéro de dépôt: 15193590.5
(22) Date de dépôt: 09.11.2015
(51) Int. Cl.: H02M 7/12, H02H 9/00, H02M 1/36

(54) **CIRCUIT LIMITEUR DE COURANT D'APPEL**
BEGRENZUNGSSCHALTKREIS FÜR DEN EINSCHALTSTROM
CIRCUIT LIMITING INRUSH CURRENT

(30) Priorité: 02.02.2015 FR 1550789
(43) Date de publication de la demande: 03.08.2016
(73) Titulaire: STMicroelectronics (Tours) SAS, 37100 Tours (FR); STMicroelectronics, Inc., Coppell, TX 75019 (US)
(72) Inventeur: GONTHIER, Laurent, 37000 TOURS (FR); NINA, Muriel, 37210 VOUVRAY (FR); ASTRAUSKAS, Jurgis, ST CHARLES, IL 60175 (US)
(74) Mandataire: Cabinet Beaumont

(56) Documents cités:
- EP-A1- 2 871 760
- EP-A2- 1 289 105
- WO-A1-2008/131795
- DE-A1- 3 513 365
- US-A- 5 264 988
- US-A- 5 287 263
- US-A1- 2007 001 654
- US-A1- 2012 155 138

## Description

### Domaine

La présente description concerne de façon générale les dispositifs électroniques et, plus particulièrement, les convertisseurs alternatif-continu utilisés en amont d'une alimentation à découpage.

### Exposé de l'art antérieur

On connait de nombreuses architectures de convertisseurs alternatif-continu, basées sur des éléments de redressement commandables (thyristors, par exemple) ou non (diodes) alimentés par une tension alternative et fournissant une tension continue, cette tension continue étant le cas échéant elle-même reconvertie en tension alternative.

On se préoccupe généralement de limiter le courant d'appel, c'est-à-dire les pics de courant qui se produisent à chaque alternance de la tension alternative tant que la tension aux bornes d'un condensateur en sortie du pont de redressement n'a pas atteint un niveau suffisant et ceci notamment dans les phases de démarrage.

Les documents EP 1289,105 et US 2012/230075 décrivent des exemples de convertisseurs alternatif-continu. Résumé

Un mode de réalisation pallie tout ou partie des inconvénients des circuits usuels de limitation de courant d'appel dans un convertisseur de puissance.

Un mode de réalisation propose une solution compatible avec un démarrage d'une alimentation à découpage alimentée par le convertisseur.

Un mode de réalisation propose une solution compatible avec une fonction doublage de tension au niveau d'un pont redresseur alimenté par la tension alternative.

Ainsi, un mode de réalisation prévoit un convertisseur alternatif-continu comportant :
une première borne et une deuxième borne, destinées à recevoir une tension alternative ;
une troisième borne et une quatrième borne, destinées à fournir une première tension continue ;
au moins un premier élément capacitif reliant les troisième et quatrième bornes ;
un pont de redressement dont des bornes d'entrée sont respectivement couplées aux première et deuxième bornes et dont des bornes de sortie sont respectivement connectées aux troisième et quatrième bornes ; et
au moins un premier élément inductif, en série avec un premier interrupteur, entre une des première et deuxième bornes et une des bornes d'entrée du pont.

Selon un mode de réalisation, un élément de redressement couple un noeud, entre le premier élément inductif et l'interrupteur, à au moins une cinquième borne, destinée à fournir au moins une deuxième tension, référencée au potentiel de la quatrième borne et d'amplitude inférieure à celle de la première tension.

Selon un mode de réalisation, l'interrupteur contrôle l'angle de phase de mise en conduction du pont.

Selon un mode de réalisation, l'interrupteur est un triac.

Selon un mode de réalisation, la référence de commande du triac est connectée audit noeud.

Selon un mode de réalisation, un transformateur est intercalé entre l'élément de redressement et la cinquième borne.

Selon un mode de réalisation, un deuxième élément inductif connecte la deuxième borne à la quatrième borne.

Selon un mode de réalisation, les éléments inductifs sont couplés et forment un filtre de mode commun.

Selon un exemple de réalisation non couvert par les revendications, l'interrupteur est constitué de deux thyristors à cathode commune.

Selon un mode de réalisation, le convertisseur comporte au moins un élément de configuration entre un mode suiveur et un mode doubleur de tension.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique, un exemple d'architecture usuelle de convertisseur alternatif-continu équipé d'un circuit de limitation du courant d'appel ;
la figure 2 représente, de façon très schématique, un mode de réalisation d'un convertisseur alternatif-continu à circuit limiteur de courant d'appel ; et
la figure 3 est une représentation plus détaillée d'un mode de réalisation d'un convertisseur de puissance à limiteur de courant d'appel.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les circuits alimentés par le convertisseur de puissance n'ont pas été détaillés, les modes de réalisation décrits étant compatibles avec les applications usuelles. Dans la description, le terme "connecté" désigne une connexion directe entre deux éléments, alors que les termes "couplé" et "relié" désignent une connexion entre deux éléments qui peut être directe ou par l'intermédiaire d'un ou plusieurs autres éléments. Dans la description qui suit, lorsque l'on fait référence aux termes "environ", "approximativement" ou "de l'ordre de", cela signifie à 10 % près, de préférence à 5 % près.

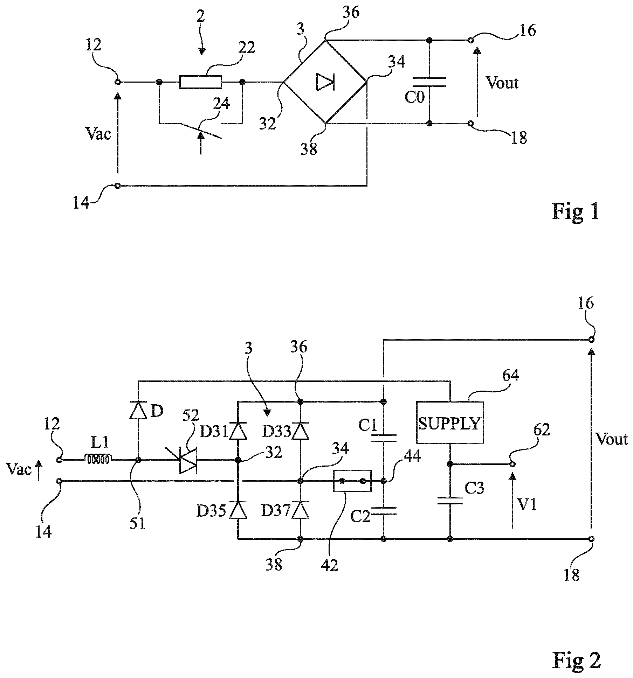

La figure 1 représente, de façon schématique, un exemple d'architecture usuelle de convertisseur alternatif-continu équipé d'un circuit de limitation du courant d'appel.

Deux bornes d'entrée 12 et 14 sont destinées à recevoir une tension alternative, par exemple, la tension du réseau de distribution électrique (par exemple 230 ou 120 volts, 50 ou 60 Hz). La borne 12 est reliée, par l'intermédiaire d'un montage 2 limiteur de courant d'appel, à une première borne 32 d'entrée de redressement d'un pont redresseur 3 (par exemple, double alternance) dont la seconde borne 34 d'entrée de redressement est connectée à la borne 14. Les sorties redressées 36 et 38 du pont sont respectivement connectées à des bornes de sortie 16 et 18, fournissant une tension continue. Un condensateur C0 de stockage et lissage relie les bornes 16 et 18. Le montage limiteur de courant d'appel est constitué d'une résistance 22, reliant les bornes 12 et 32 et d'un interrupteur 24 actionnable pour court-circuiter la résistance 22. Au démarrage (condensateur C0 déchargé), l'interrupteur 24 est ouvert et la résistance 22 limite le courant de charge du condensateur C0. En régime établi, l'interrupteur K est fermé pour court-circuiter la résistance et limiter les pertes.

Des solutions plus élaborées utilisent, entre une borne d'entrée d'application de la tension alternative et le pont redresseur, un dispositif de commande de l'angle de phase de mise en conduction du pont, c'est-à-dire de sélection de l'instant, à chaque alternance de la tension alternative, à partir duquel le pont de redressement est alimenté. Dans un tel cas, un élément résistif est généralement présent entre la borne d'application de la tension alternative et l'interrupteur. Par ailleurs, le démarrage du convertisseur requiert une source de tension pour alimenter un circuit de commande de l'interrupteur de contrôle de phase. Les solutions actuelles font souvent appel à des montages complexes. De plus, la présence de l'élément résistif augmente les pertes.

La figure 2 représente, de façon schématique, un mode de réalisation d'un convertisseur alternatif-continu à circuit limiteur de courant d'appel.

On retrouve un pont redresseur 3 dont des bornes d'entrées sont couplées à des première et deuxième bornes 12 et 14 d'application d'une tension alternative Vac et dont des bornes de sortie redressées sont connectées (reliées directement) à des troisième et quatrième bornes 16 et 18 de fourniture d'une tension continue Vout. Au moins un élément capacitif connecte entre elles les bornes 16 et 18.

Dans l'exemple de la figure 2, on suppose un convertisseur susceptible de fonctionner en mode doubleur de tension ou en mode suiveur. Par conséquent, on prévoit deux éléments capacitifs C1 et C2 (de même valeur) en série entre les bornes 16 et 18 et un élément 42 (par exemple, un cavalier, un interrupteur, un relais, etc.) reliant le point milieu 44 entre les éléments capacitifs C1 et C2 à la borne 14. Lorsque la connexion 42 est ouverte (pas de liaison entre la borne 14 et le noeud 44), le pont fonctionne en mode suiveur, c'est-à-dire que la valeur maximale de la tension Vout correspond à la valeur crête de la tension Vac (aux pertes près) . Quand la connexion 42 est active, le convertisseur fonctionne en mode doubleur de tension, c'est-à-dire que la valeur maximale de la tension Vout correspond au double de la valeur crête de la tension Vac.

Un élément de contrôle de phase, constitué par exemple d'un triac 52, est connecté en série avec un élément inductif L1 entre une (32) des bornes d'entrée alternative du pont 3 et la borne 12. Le triac 52 est destiné à commander l'angle de phase de mise en conduction du pont.

Pour permettre le démarrage du convertisseur, et plus particulièrement la commande du triac 52, on prévoit un élément de redressement D qui couple le point milieu 51 entre l'inductance L1 et le triac 52 à une cinquième borne 62 de fourniture d'une basse tension continue V1. Par basse tension continue, on entend une tension inférieure (dans un rapport d'au moins 10) à la tension fournie entre les bornes 16 et 18. Cette tension continue V1 est destinée à alimenter des circuits électroniques de commande du convertisseur et, notamment, un circuit (par exemple un microcontrôleur non représenté en figure 2) de commande du triac 52 par l'intermédiaire d'un dispositif de commande (non représenté) qui gère la différence de potentiel entre les références 18 et 51. Dans l'exemple de la figure 2, la tension V1 est fournie entre la borne 62 et la borne 18 qui constitue une référence commune pour les circuits référencés au bus de tension continue. Un condensateur C3 connecte les bornes 62 et 18. Toujours dans l'exemple de la figure 2, on suppose la présence d'un circuit d'alimentation 64, par exemple de type régulateur de tension entre la diode D et la borne 62.

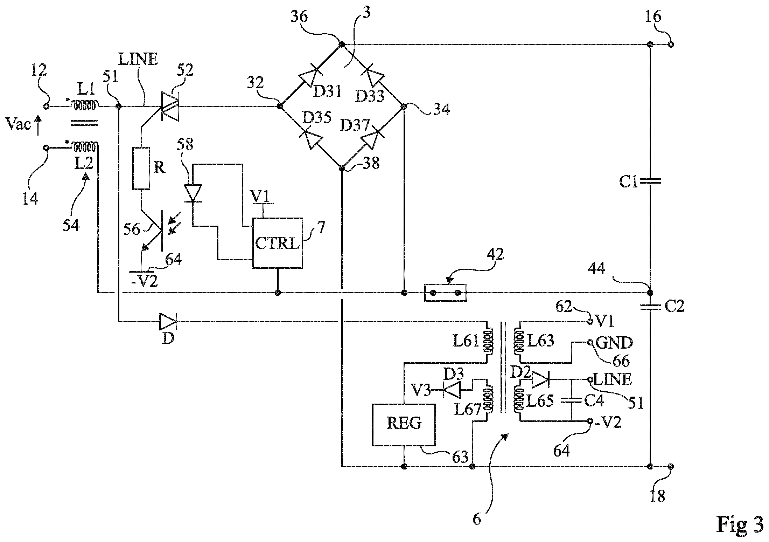

La figure 3 représente un mode de réalisation plus détaillé d'un convertisseur alternatif-continu à circuit limiteur de courant d'appel. On retrouve un pont redresseur (diodes D31, D33, D35, D37) dont des bornes d'entrée 32 et 34 sont couplées à des premières et deuxièmes bornes 12 et 14 d'application d'une tension alternative Vac et dont des bornes de sortie redressées 36 et 38 sont connectées (reliées directement) à des bornes 16 et 18 de fourniture d'une tension continue Vout. L'élément capacitif de sortie est, comme en figure 2, constitué de deux condensateurs C1 et C2 en série.

Pour assurer la commutation entre le mode suiveur et le mode doubleur de tension, un élément de connexion 42 (par exemple, un cavalier, un interrupteur, un relais, etc.) couple le noeud 44 à la borne 14.

Côté bornes d'entrée 12 et 14, l'élément inductif L1 fait partie d'un filtre de mode commun 54, formé d'un transformateur dont un premier enroulement L1 connecte la borne 51 de la diode D à la borne 12 et dont un deuxième enroulement L2, couplé au premier, couple la borne 14 à l'élément 42.

Dans l'exemple de la figure 3, on a illustré une partie de la commande du triac 52. La gâchette de celui-ci est reliée, par une résistance R en série avec un optotransistor 56 d'un optocoupleur, à une borne 64 de fourniture d'une tension (-V2) négative par rapport au potentiel de la borne 18. Une photodiode 58 de l'optocoupleur est susceptible d'être commandée par un circuit de commande 7 (CTRL), par exemple de type microcontrôleur, afin de mettre en conduction le triac en appliquant une commande en angle de phase. Le circuit 7 est, par exemple, alimenté par une tension V1 positive.

Une particularité avantageuse du mode de réalisation représenté consiste à placer la référence de commande du triac 52 au noeud 51. Ceci permet d'utiliser une alimentation commune pour alimenter le circuit de gâchette du triac 52 (c'est-à-dire notamment le transistor de son opto-coupleur 64) et le circuit d'autres triacs (non représentés) dont les références pourraient aussi être reliées au point 51 (ou 12) afin de contrôler des charges alternatives entre les bornes 12 et 14.

La génération des tensions continues V1 et -V2 est obtenue à partir d'un redressement effectué par la diode D. Par exemple, un transformateur 6 comporte, côté primaire, un premier enroulement L61 dont une première extrémité est connectée à la cathode de la diode D1 et donc une seconde extrémité est reliée, par l'intermédiaire d'un régulateur (REG) 63, à la masse 18. Au secondaire du transformateur 6, un premier enroulement L63 fournit à ses bornes (62 et 66) la tension V1, la borne 66 étant en fait commune à la borne 18. Un second enroulement L65 fournit la tension négative -V2, une première extrémité de l'enroulement L65 étant couplée, par une diode D2, à la borne 51 (anode de la diode D) et son autre extrémité étant connectée à la borne 64 fournissant la tension -V2. Un élément capacitif C4 relie les bornes 51 et 64. Le rôle de la diode D2 est de constituer, avec la diode D, un demi-pont de redressement.

Dans l'exemple de la figure 3, on suppose la présence d'un quatrième enroulement L67 susceptible de fournir une troisième tension continue V3, dans cet exemple positive, les extrémités d'enroulement 67 étant respectivement reliées par une diode D3 à la borne fournissant la tension V3 et directement à la masse 18.

En fonctionnement, la diode D37 du pont permet de refermer la circulation du courant, le courant circulant à travers la diode D, le premier enroulement 61, le régulateur 63, la diode D37 pour revenir à la borne 14 de la tension Vac et permet ainsi la génération des basses tensions V1, -V2 et V3. La présence de l'élément inductif L1 limite les pics de courant et le di/dt à la fermeture du triac.

Que ce soit en mode suiveur ou en mode doubleur, le circuit ainsi proposé permet de limiter le courant d'appel tout en évitant la présence d'un élément résistif. De plus, on tire profit d'un filtre de mode commun généralement présent dont les valeurs inductives « parasites » en mode différentiel sont suffisantes pour remplir la fonction requise.

En outre, on évite d'avoir besoin d'une deuxième alimentation à découpage pour générer les basses tensions.

Selon un exemple de réalisation non couvert par les revendications et non représenté, la fonction assurée par le triac est remplie par deux thyristors à cathode commune reliée à la borne 36 qui remplacent donc les diodes D31 et D33. Ce mode de réalisation ne permet pas un doublage de la tension d'entrée et ne fonctionne qu'en mode suiveur.

Divers modes de réalisation ont été décrits. Diverses variantes et modifications apparaîtront à l'homme de l'art. En particulier, la constitution du montage de génération des basses tensions d'alimentation (par rapport à la tension fournie par la conversion alternative-continue opérée par le pont principal) dépend de l'application et des tensions requises. En outre, la mise en oeuvre pratique des modes de réalisation qui ont été décrits est à la portée de l'homme du métier à partir des indications fonctionnelles données ci-dessus.

## Revendications

1. Convertisseur alternatif-continu comportant :
une première borne (12) et une deuxième borne (14), destinées à recevoir une tension alternative (Vac) ;
une troisième borne (16) et une quatrième borne (18), destinées à fournir une première tension continue (Vout) ;
deux éléments capacitifs (C1, C2) en série reliant les troisième et quatrième bornes ;
un pont de redressement (3) double alternance dont des bornes d'entrée (32, 34) sont respectivement couplées aux première et deuxième bornes et dont des bornes de sortie sont respectivement connectées aux troisième et quatrième bornes ;
au moins un premier élément inductif (L1), en série avec un premier interrupteur (52), entre une des première et deuxième bornes et une première borne d'entrée du pont, ledit premier interrupteur (52) étant constitué d'un triac et contrôlant l'angle de phase de mise en conduction du pont (3) ;
un deuxième élément inductif (L2), couplé au premier élément inductif (L1) et formant un filtre de mode commun (54) avec ce dernier, et
le deuxième élément inductif (L2) reliant ladite deuxième borne (14) à un élément de connexion commandable (42) reliant une deuxième borne d'entrée du pont et le point milieu (44) de l'association en série des deux éléments capacitifs.

2. Convertisseur selon la revendication 1, dans lequel un élément de redressement (D) couple un noeud (51), entre le premier élément inductif (L1) et l'interrupteur (52), à au moins une cinquième borne (62), destinée à fournir au moins une deuxième tension (V1), référencée au potentiel de la quatrième borne (18) et d'amplitude inférieure à celle de la première tension (Vout).

3. Convertisseur selon la revendication 1 ou 2, dans lequel la référence de commande du triac (52) est connectée audit noeud (51).

4. Convertisseur selon l'une quelconque des revendications 1 à 3, dans lequel un transformateur (6) est intercalé entre l'élément de redressement (D) et la cinquième borne (62).

## Patentansprüche

1. AC/DC-Wandler, der Folgendes aufweist:
einen ersten Anschluss (12) und einen zweiten Anschluss (14), die dazu bestimmt sind, eine Wechselspannung (Vac) zu empfangen;
eine dritten Anschluss (16) und einen vierten Anschluss (18), die dazu bestimmt sind, eine erste Gleichspannung (Vout) zu liefern;
wenigstens ein erstes kapazitives Element (C1, C2), das die dritten und vierten Anschlüsse verbindet;
eine Vollwellen-Gleichrichterbrücke (3) mit Eingangsanschlüssen (32, 34), die mit dem ersten bzw. dem zweiten Anschluss gekoppelt sind, und mit Ausgangsanschlüssen, die mit dem dritten bzw. dem vierten Anschluss verbunden sind;
wenigstens ein erstes induktives Element (L1) in Reihe mit einem ersten Schalter (52) zwischen einem der ersten und zweiten Anschlüsse und einem der Eingangsanschlüsse der Brücke, wobei der erste Schalter (52) ein Triac ist und den Einschaltphasenwinkel der Brücke (3) steuert;
ein zweites induktives Element (L2), das mit dem ersten induktiven Element (L1) gekoppelt ist und mit diesem ein Gleichtaktfilter (54) bildet, und wobei
das zweite induktive Element (L2) den zweiten Anschluss (14) mit einem steuerbaren Verbindungselement (42) koppelt, das einen zweiten Eingangsanschluss der Brücke und den Mittelpunkt (44) der Reihenschaltung der beiden kapazitiven Elemente koppelt.

2. Wandler nach Anspruch 1, wobei ein Gleichrichterelement (D) einen Knoten (51) zwischen dem ersten induktiven Element (L1) und dem Schalter (52) mit wenigstens einem fünften Anschluss (62) koppelt, der dazu bestimmt ist, wenigstens eine zweite Spannung (V1) zu liefern, die zu dem Potential des vierten Anschlusses (18) referenziert ist und eine Amplitude aufweist, die kleiner als die der ersten Spannung (Vout) ist.

3. Wandler nach Anspruch 1 oder 2, wobei die Steuerreferenz des Triacs (52) mit dem Knoten (51) verbunden ist.

4. Wandler nach einem der Ansprüche 1 bis 3, bei dem ein Transformator (6) zwischen dem Gleichrichterelement (D) und dem fünften Anschluss (62) angeordnet ist.

## Claims

1. An AC/DC converter comprising:
a first terminal (12) and a second terminal (14), intended to receive an AC voltage (Vac);
a third terminal (16) and a fourth terminal (18), intended to supply a first DC voltage (Vout);
at least one first capacitive element (C1, C2) connecting the third and fourth terminals;
a fullwave rectifying bridge (3) having input terminals (32, 34) respectively coupled to the first and second terminals and having output terminals respectively connected to the third and fourth terminals;
at least one first inductive element (L1), in series with a first switch (52), between one of the first and second terminals and one of the input terminals of the bridge, said first switch (52) being a triac and controlling the turn-on phase angle of the bridge (3);
a second inductive element (L2), coupled to the first inductive element (L1) and forming with it a common-mode filter (54), and
the second inductive element (L2) coupling said second terminal (14) to a controllable connection element (42) coupling a second input terminal of the bridge and the midpoint (44) of the series association of the two capacitive elements.

2. The converter of claim 1, wherein a rectifying element (D) couples a node (51), between the first inductive element (L1) and the switch (52), to at least a fifth terminal (62), intended to supply at least a second voltage (VI), referenced to the potential of the fourth terminal (18) and having an amplitude smaller than that of the first voltage (Vout).

3. The converter of claim 1 or 2, wherein the control reference of the triac (52) is connected to said node (51).

4. The converter of any of claims 1 to 3, wherein a transformer (6) is interposed between the rectifying element (D) and the fifth terminal (62).
